Europäisches Patentamt

European Patent Office

Office européen des brevets

(11) Veröffentlichungsnummer: **0 367 992**
**A2**

## (12) EUROPÄISCHE PATENTANMELDUNG

(21) Anmeldenummer: **89118481.4**

(22) Anmeldetag: **05.10.89**

(51) Int. Cl.⁵: **A01B 29/04**

(30) Priorität: **11.11.88 DE 8814135 U**

(43) Veröffentlichungstag der Anmeldung:
**16.05.90 Patentblatt 90/20**

(84) Benannte Vertragsstaaten:
**DE FR GB NL**

(71) Anmelder: **Rabewerk Heinrich Clausing**

**D-4515 Bad Essen 1(DE)**

(72) Erfinder: **Warnking, Richard, Dipl.-Ing.**
**Klockenpatt 5**
**D-4515 Bad Essen 1(DE)**

(74) Vertreter: **Missling, Arne, Dipl.-Ing.**
**Patentanwalt Bismarckstrasse 43**
**D-6300 Giessen(DE)**

(54) **Ackerwalze.**

(57) Die Erfindung betrifft eine Ackerwalze mit mehreren nebeneinander angeordneten Reifen (1). Um eine gleichmäßige Bodenbearbeitung zu erreichen und um ein Anhaften von Erdreich zu vermeiden, sind mehrere ringförmige Felgenelemente (3a, 3b) vorgesehen, welche nebeneinander zur Ausbildung eines im wesentlichen zylindrischen Walzenkörpers angeordnet sind und mehrere drucklose Niederquerschnittsreifen (1) tragen.

Fig.1

EP 0 367 992 A2

## Ackerwalze

Die Erfindung betrifft eine Ackerwalze mit mehreren nebeneinander angeordneten Reifen.

Es sind aus den Stand der Technik vielfältige Ausgestaltungsformen von Ackerwalzen bekannt, welche mehrere nebeneinander angeordnete Reifen umfassen, welche auf dem Ackerboden abrollen. Die Reifen sind üblicherweise in Form von Fahrzeug-Gummireifen ausgebildet, eine derartige Walze ist beispielsweise aus GB-PS 739 871 und der EP-A1 -223 134 bekannt. Bei dieser Ausgestaltung erweist es sich als nachteilig, daß, ähnlich wie bei einer zylindrischen Metallwalze, Erdreich und/oder Pflanzenreste an der Walzenoberfläche haften, so daß zusätzliche Maßnahmen zur Reinigung der Walze erforderlich sind. Ein weiterer Nachteil einer derartigen Walze ist darin zu sehen, daß Erdreich oder ähnliches in die Zwischenräume zwischen benachbarten Rädern eindringen kann, so daß zusätzliche Maßnahmen, beispielsweise Abdeckringe, vorgesehen werden müssen.

Aus der EP-A1-245 648 ist eine Bodenwalze bekannt, bei welcher im Innenraum der Gummireifen Traggerüste angeordnet sind, um das Maß der Verformung der nur mit einem geringen Überdruck aufgepumpten Reifen zu begren zen. Die Reifen können somit eine gewisse Walkbewegung durchführen, welche zu einem Abplatzen des anhaftenden Erdreichs führen soll. Bei dieser Konstruktion erweist es sich als nachteilig, daß zum einen erhebliche Zwischenräume zwischen den Reifen vorhanden sind, in welche Erdreich, Steine oder ähnliches eindringen können, und daß zum anderen, bedingt durch die Verformung des Reifens beim Walken und die Traggerüste, die Reifen eine unebene Aufstandsfläche aufweisen, so daß keine ebene Ausbildung der Bodenoberfläche möglich ist.

Die EP-A2-160 612 zeigt eine Ackerwalze, welche in Form einer Zahnwalze ausgebildet ist. In den Zwischenräumen zwischen den im wesentlichen scheibenförmigen Zahnanordnungen sind Reifen angeordnet, welche eine Walkbewegung ausführen können, um auf diese Weise anhaftendes Erdreich abzustoßen.

Die DE-OS 23 17 969, welche den nächstkommenden Stand der Technik bildet, zeigt eine Ackerwalze mit mehreren nebeneinander angeordneten Reifen, die in axialer Richtung einen Abstand aufweisen und somit ebenfalls das Problem aufwerfen, daß Erdklumpen, Steine oder ähnliches in die Zwischenräume zwischen den Reifen eindringen kann. Die Reifen selbst sind in Form von Niederdruckreifen ausgebildet.

Der Erfindung liegt die Aufgabe zugrunde, eine Ackerwalze der eingangs genannten Art zu schaffen, welche bei einfachem Aufbau und zuverlässiger Wirkungsweise eine gleichmäßige und ebene Bearbeitung des Bodens ermöglicht und bei welcher ein Anhaften von Erdreich oder ähnlichem verhindert wird.

Erfindungsgemäß wird die Aufgabe dadurch gelöst, daß mehrere ringförmige Felgenelemente vorgesehen sind, welche nebeneinander zur Ausbildung eines im wesentlichen zylindrischen Walzenkörpers angeordnet sind und mehrere drucklose Niederquerschnittsreifen tragen.

Die erfindungsgemäße Ackerwalze zeichnet sich durch eine Reihe erheblicher Vorteile aus. Die drucklosen Niederquerschnittsreifen können beim Abrollen auf dem Boden sehr stark walken, so daß das Anhaften von Erdreich, insbesondere von feuchtem Erdreich verhindert wird, da dieses durch die Verformung des Niederquerschnittsreifens von dessen Oberfläche abfällt. Im Gegensatz zum Stand der Technik, bei welchem Reifen verwendet werden, welche im Bereich ihrer Aufstandsfläche nur in einem gewissen Maße verformbar sind, ist erfindungsgemäß die Möglichkeit geschaffen, die Reifen, bedingt durch ihre Ausbildung als drucklose Niederquerschnittsreifen in starkem Maße zu verformen. Daraus ergibt sich ein weiterer, wesentlicher Vorteil der erfindungsgemäßen Ackerwalze, welcher darin besteht, daß alle Reifen stets in gleichmäßiger Weise verformt werden, während es bei den aus dem Stand der Technik bekannten Ackerwalzen erforderlich war, unter hohem Aufwand eine exakte Druckeinstellung der einzelnen Reifen vorzunehmen. Erfindungsgemäß wird somit gewährleistet, daß der Boden über die gesamte Breite der Ackerwalze in gleichem Maße bearbeitet bzw. gewalzt wird.

Die Verwendung ringförmiger Felgenelemente gestattet es, einen im wesentlichen zylindrischen Walzenkörper auszubilden, welcher im Bereich seiner Auflagefläche, d. h. in dem Bereich, in welchem die Niederquerschnittsreifen verformt sind, hinsichtlich seiner Form und Wirkungsweise einer zylindrischen, metallischen Walze entspricht, an deren Außenfläche eine Gummischicht gleicher Dicke angeordnet ist. Daraus ergibt sich eine sehr gleichmäßige und von dem Aufbau der Reifen unbeeinflußte Bodenbearbeitung. Demgegenüber führen die Reifen bei den aus dem Stand der Technik bekannten Ackerwalzen, bedingt durch die Festigkeit der Flankenbereiche der Reifen und der Übergangsbereiche von der Lauffläche zu den Flanken und dem dadurch dem undefinierten Abrollradius, zu Schwingungen und zu einem ungleichmäßigen Abrollen der Ackerwalze bzw. einem ungleichmäßigen Tiefgang der mit der Walze gekoppelten Geräte.

Ein weiterer, wesentlicher Vorteil der Erfindung ergibt sich daraus, daß die drucklosen Niederquerschnittsreifen im Bereich der Aufstandsfläche des Reifens so verformbar sind, daß eine ebene, rillenfreie Bodenoberfläche erzielbar ist.

In einer günstigen Weiterbildung der Erfindung ist vorgesehen, daß der Reifen eine Lauffläche und zwei miteinander verbundene Schulterbereiche umfaßt und daß jeder Schulterbereich auf einem Felgenelement abgestützt ist. Erfindungsgemäß sind somit die Felgenelemente nicht in Form üblicher Felgen ausgestaltet, welche die beiden Schulterbereiche eines einzelnen Reifens lagern, vielmehr dient jedes Felgenelement zur Abstützung eines Schulterbereichs zweier benachbarter Reifen. Diese Maßnahme ermöglicht zum einen eine besonders einfache Ausgestaltung und Herstellung der Felgenelement, zum anderen ist die Möglichkeit geschaffen, den Zwischenbereich zwischen benachbarten Reifen so auszubilden, daß das Eindringen von Erdreich, Steinen oder Pflanzenteilen vermieden wird. Da zwischen benachbarten Reifen im Bereich der Felgenelemente kein freier Spalt oder Zwischenraum vorhanden ist, ist es möglich. auf zusätzliche Abstreifelemente oder ähnliches zu verzichten.

Es kann sich weiterhin als günstig erweisen, daß im mittleren Bereich der Ackerwalze erste Felgenelemente angeordnet sind, welche zwei Anlageschultern für benachbarte Reifen aufweisen, und daß an den beiden Enden jeweils ein zweites Felgenelement mit jeweils einer Anlageschulter angeordnet ist. Bei dieser Ausgestaltungsform kann insbesondere der jeweilige Endbereich der Ackerwalze so ausgestaltet sein, daß der äußerste Reifen bündig mit der Seitenfläche der Ackerwalze abschließt. Somit wird über deren gesamte Länge eine gleichförmige Ausgestaltung ermöglicht, welche sowohl eine gleichmäßige Bodenbearbeitung erlaubt, als auch das Anhaften von Erdreich im Bereich der Stirnseiten der Ackerwalze verhindert. Weiterhin ist es durch diese Ausgestaltung möglich, baukastenartig Ackerwalzen verschiedener Breite herzustellen.

Erfindungsgemäß kann es günstig sein, wenn die Anlageschultern des ersten Felgenelements axial aneinandergrenzen. Bei dieser Ausgestaltung ist der Zwischenraum zwischen benachbarten Reifen minimiert, so daß die Ackerwalze im Auflagebereich vollständig auf dem Gummimaterial der Reifen aufliegt. Alternativ dazu kann es sich, abhängig von den jeweiligen Anwendungszwecken, auch als günstig erweisen, wenn die Anlageschultern des ersten Felgenelements axial mittels eines im wesentlichen zylindrischen Distanzbereichs verbunden sind. Der Distanzbereich kann dabei auch radial zurückversetzt ausgebildet sein. Bei letzterer Ausgestaltung ist es möglich, den Druck auf den Boden in den Bereichen zwischen den Reifen zu vermindern. Falls die Distanzbereiche nicht rückversetzt sind, so können diese zusätzlich als Auflageflächen dienen.

Die Schulterbereiche des Reifens können so ausgebildet sein, daß sie zueinander einen stumpfen Winkel oder einen Winkel von 180o aufweisen. Um eine gleichmäßige Verformung des Reifens im Aufstandsbereich der Ackerwalze sicherzustellen, sind vielfältige Ausgestaltungsformen der Reifen möglich, insbesondere sollten diese jedoch jeweils möglichst niedrige seitliche Schulter-oder Flankenbereiche aufweisen.

Zur sicheren Zuordnung der einzelnen Felgenelemente im zentrischen Bereich des Reifens, d. h. in dem Bereich, in welchem die Felgenelemente gegeneinander anliegen, kann es sich als günstig erweisen, wenn die Anlageschultern benachbarter Felgenelemente im Zentrumsbereich des Reifens axial durch einen im wesentlichen zylindrischen Zwischenbereich beabstandet sind. Der Zwischenbereich kann entweder jeweils in Form seitlicher zylindrischer Ansätze des Felgenelementes ausgebildet sein oder durch einen separaten Zylinderring gebildet werden.

In einer alternativen Ausgestaltung der erfindungsgemäßen Ackerwalze ist vorgesehen, daß der Reifen mit zumindest einem mit einer Lauffläche verbundene, sich in radialer Richtung erstreckenden Stegbereich versehen ist, dessen radial liegender Endbereich mittels seitlicher Wülste verbreitert ist. Der Endbereich ist dabei mittels der Felgenelemente abgestützt. Diese Ausgestaltung ermöglicht es, den Laufflächenbereich des Reifens in beliebiger Weise auszubilden, während der Stegbereich eine sichere Halterung und Lagerung an der Ackerwalze gewährleistet. Es ist dabei möglich, die erfindungsgemäßen Reifen, in beliebiger Weise auf Achsen oder Achsrohren anzuordnen und zu der erfindungsgemäßen Ackerwalze zu kombinieren. .

Eine besonders günstige Lagerung des Reifens ist dann gegeben, wenn die Felgenelemente die Wülste zumindest zum Teil umgreifen. Weiterhin kann es sich als günstig erweisen, den Reifen mit einem mittigen Stegbereich zu versehen oder seitlich angrenzend an die Lauffläche jeweils einen Stegbereich auszubilden. Die Anzahl der Stegbereiche hängt von der Gesamtbreite des Reifens ab und läßt sich in besonders einfacher Weise den jeweiligen Anforderungen anpassen. Anstelle eines sehr breiten mittleren Stegbereichs ist es somit möglich zwei separate Stegbereiche an den Seitenrändern der Lauffläche vorzusehen, um die Kippfestigkeit des Reifens zu erhöhen.

In einer besonders vorteilhaften Ausgestaltung der Erfindung ist vorgesehen daß der Reifen im Bereich der Laufflächen mit radial und/oder axial von der Reifenmitte weggerichteten, elastischen Ringwülsten versehen ist. Die Ringwülste können erfindungsgemäß so ausgestaltet sein, daß sich ihre Form insbesondere die Querschnittsform zwischen dem belasteten und dem unbelasteten Zustand stark ändert. Durch diese Verformungsvorgänge werden an den Reifen anhaftende Erdbrocken und ähnliches abgesprengt, so daß die Walze ein hohes Maß an Selbstreinigungskraft aufweist. Weiterhin kann bei dieser Ausgestaltungsform auch auf einen Hohlraum des Reifens verzichtet werden, da die jeweiligen Oberflächen- oder Laufflächenbereiche eine ausreichende Verformung und Eigenelastizität aufweisen. Diese Form der Reifenprofile ist somit besonders kostengünstig und einfach herstellbar und erfordert weiterhin nur einen geringen Montageaufwand. Der zusätzliche Vorteil liegt darin, daß es nicht erforderlich ist, Reifeninnendrücke oder ähnliches einzustellen oder zu kontrollieren, so daß die aus den Reifen aufgebaute Ackerwalze sehr zuverlässig ist und eine hohe Lebensdauer aufweist.

Besonders günstig ist es hierbei, wenn die Ringwülste im unbelasteten Zustand des Reifens einen konkaven Laufflächenbereich umgrenzen und im belasteten Zustand des Reifens einen Laufflächenbereich ausbilden, welcher entweder eben oder ballig sein kann. Hierdurch wird zum einen eine ausreichende Verfestigung des Erdreichs sichergestellt, zum anderen bewirkt die Walkbewegung des Reifens, daß dieser die an der Oberfläche haftenden Erdklumpen oder ähnliches abstößt, um eine Verschmutzung der Ackerwalze bzw. ein Zusetzen mit Erdreich zu vermeiden.

Um die Felgenelemente zur Ausbildung des im wesentlichen zylindrischen Walzenkörpers zueinander zuzuordnen können diese auf einen zylindrischen Tragkörper aufgeschoben sein. Der zylindrische Tragkörper kann in Form eines einfachen Zylinderrohres ausgebildet sein. Da der Tragkörper der gesamten Ackerwalze eine ausreichende Festigkeit verleiht, ist es bei dieser Ausgestaltungsform nicht erforderlich, daß die Felgenelemente in Form geschlossener Ringe ausgestaltet sind, vielmehr können diese auch als Halbringe hergestellt werden. Dies vereinfacht, abhängig von der Ausgestaltung der Felgenelemente, die Herstellung und führt zu einer beträchtlichen Kostenreduzierung.

In einer anderen Ausgestaltungsform können die Felgenelemente seitlich, miteinander formschlüssig in Eingriff bringbare Ansätze umfassen, d. h. die Felgenringe können seitlich ineinandergesteckt werden, um auf diese Weise einen zylindrischen Walzenkörper auszubilden. Die seitlichen Ansätze, welche sich gegenseitig über- bzw. untergreifen, sichern einen festen Halt der Felgenelemente aneinander.

In einer weiteren, ebenfalls günstigen Ausgestaltungsform können die Felgenelemente mittels mehrerer, am Innenumfang beabstandet angeordneter gespannter Haltestäbe getragen werden. Beispielsweise ist es möglich, drei oder vier Haltestäbe vorzusehen, welche mit Endscheiben verbunden bzw. durch diese geführt sind.

Im Falle einer Befestigung und Montage der Walze durch eine Achse, welche durch seitliche Stirnscheiben, welche von außen gegen die Felgenelemente anliegen, gehalten wird, bewirkt die Achse eine Verspannung der gesamten Walze, durch welche dieser ein hohes Maß an Stabilität vermittelt wird.

Bei der erfindungsgemäßen Tragwalze sind die Felgenelemente auf dem Tragkörper bevorzugter Weise so angeordnet, daß eine Relativbewegung zwischen den einzelnen Felgenelementen und zwischen den Felgenelementen und dem Tragkörper verhindert wird. Durch Verwendung einer schäumenden Masse, welche in einem Zwischenraum zwischen den Felgenelementen und dem Tragkörper angeordnet ist, ist es möglich, einen sicheren Sitz der Felgenelemente oder Ringe auf dem Tragkörper sicherzustellen und auf diese Weise auftretende Fertigungstoleranzen auszugleichen. Eine andere Möglichkeit besteht darin, den Zwischenraum zwischen den Felgenelementen und/oder dem Tragkörper mit einer aushärtbaren elastischen Masse zu füllen, welche beispielsweise bei der Montage aufgetragen und nachfolgend ausgehärtet werden kann.

Eine andere Möglichkeit besteht darin, die Ansätze der Felgenelemente mit dem Tragkörper zu verbinden, beispielsweise durch verschweißen. Diese Ausführungsform ist besonders gut für eine Ackerwalze geeignet, bei welcher mehrere Felgenelemente oder Ringe durch mehrere lange Spannschrauben gegeneinander verspannt werden.

Erfindungsgemäß besteht eine weitere Möglichkeit, eine Relativbewegung zwischen den Felgenelementen und dem Tragkörper zu verhindern, darin, einen ringförmigen elastischen Körper zwischen die Ansätze und den Tragkörper einzulegen, gegen welchen der Tragkörper und die Ansätze anliegen. Dabei ist es möglich, die Ränder der aneinander grenzenden Bereiche der Felgenelemente konisch abzuschränken, um auf diese Weise den elastischen Ring oder Körper zu halten.

Eine weitere Möglichkeit besteht erfindungsgemäß darin, die Ansätze benachbarter Felgenelemente jeweils mit einem unterschiedlichen Durchmesser auszugestalten, so daß ein Ansatz über den anderen Ansatz aufsteckbar ist. Dabei ist es insbesondere möglich, zumindest einen der Ansätze in radialer Richtung spreizbar auszugestalten, so daß beim Zusammenschieben oder Spannen der einzelnen Felgenelemente die jeweiligen Ansätze gegeneinander gedrückt und auf diese Weise gegeneinander verkeilt werden.

Erfindungsgemäß ist es weiterhin möglich, die Felgenelemente jeweils direkt miteinander zu verbinden, dabei kann es sich als vorteilhaft erweisen, wenn an jedem Felgenelement seitliche Scheiben befestigt sind, wobei jeweils benachbarte Scheiben benachbarter Felgenelemente miteinander verbunden werden können, beispielweise mittels Schraubbolzen oder ähnlichem. Zu diesem Zwecke können die Scheiben zusätzlich zu entsprechenden Ausnehmungen zur Durchführung der Schraubbolzen mit Montageausnehmungen versehen sein. Die Montageausnehmungen können beispielsweise einen größeren Durchmesser aufweisen, als die Ausnehmungen zur Durchführung der Schraubbolzen.

Um auch unter ungünstigen Betriebszuständen ein Ablösen des Erdreichs im Übergangsbereich zwischen benachbarten Reifen sicherzustellen, kann ein zusätzlicher Abstreifer im Bereich des Außenumfanges der Ackerwalze angeordnet sein.

Unter normalen Betriebsbedingungen ist wegen des Walkens der Reifen kein Abstreifer erforderlich, da anhaftende Verunreinigungen selbsttätig abgesprengt werden. Um diesen Ablösungsvorgang zu verstärken, kann es sich erfindungsgemäß auch als günstig erweisen, wenn angrenzend an der Ackerwalze eine sich über die gesamte Breite erstreckende Reinigungsbürste vorgesehen ist.

Im folgenden wird die Erfindung anhand von Ausführungsbei spielen in Verbindung mit der Zeichnung beschrieben. Dabei zeigt:

Fig. 1 eine schematische Darstellung eines ersten Ausführungsbeispiels der Ackerwalze in Schnittansicht;

Fig. 2 eine Ansicht, ähnlich Fig. 1, eines weiteren Ausführungsbeispiels;

Fig. 3 eine Schnittansicht eines weiteren Ausführungsbeispiels, ähnlich Fig. 3;

Fig. 4 eine Schnittansicht eines Felgenelements gemäß dem Ausführungsbeispiel von Fig. 3 mit einem zugeordneten Abstreifer;

Fig. 5 eine Schnittansicht durch ein weiteres Ausführungsbeispiel eines Felgenelements;

Fig. 6 eine Schnittansicht durch ein weiteres Ausführungsbeispiel der erfindungsgemäßen Ackerwalze unter Verwendung des in Fig. 5 gezeigten Felgenelements;

Fig. 7 eine Schnittansicht eines weiteren Ausführungsbeispiels der erfindungsgemäßen Ackerwalze;

Fig. 8 eine schematische Ansicht eines weiteren Ausführungsbeispiels der erfindungsgemäßen Ackerwalze, wobei die Zuordnung der Felgenelemente dargestellt ist;

Fig. 9 eine weitere Ausgestaltungsmöglichkeit der Zuordnung der Felgenelemente zu einem Tragkörper;

Fig. 10 ein weiteres Ausführungsbeispiel, in ähnlicher Darstellung wie Fig. 9;

Fig. 11 eine weitere Ausgestaltungsform der erfindungsgemäßen Ackerwalze;

Fig. 12 eine schematische Teil-Schnittansicht durch ein weiteres Ausführungsbeispiel der erfindungsgemäßen Ackerwalze;

Fig. 13 eine Schnittansicht eines ähnliches Ausführungsbeispiels wie in Fig. 12 gezeigt;

Fig. 14 eine Teil-Schnittansicht eines weiteren Ausführungsbeispiels eines erfindungsgemäßen Reifenelements;

Fig. 15 und 16 weitere Detail-Schnittansichten weiterer Ausführungsbeispiele der erfindungsgemäßen Ackerwalze;

Fig. 17 eine Teilansicht eines weiteren Ausführungsbeispiels des erfindungsgemäßen Reifens;

Fig. 18 ein Ansicht eines weiteren Ausführungsbeispiels der Ackerwalze, ähnlich Fig. 17 und

Fig. 19 eine Teil-Schnittansicht eines weiteren Ausführungsbeispiels eines erfindungsgemäßen Felgenelements.

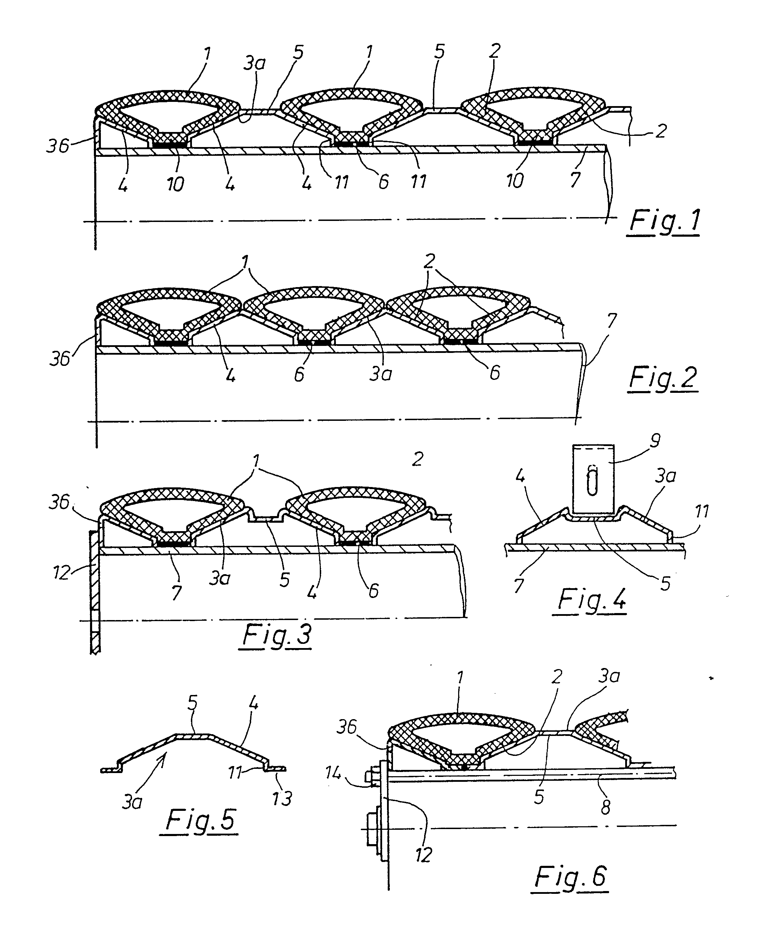

In Fig. 1 ist ein erstes Ausführungsbeispiel der erfindungsgemäßen Ackerwalze schematisch in der Schnittansicht dargestellt.

Die Ackerwalze umfaßt einen zylindrischen Tragkörper 7, welcher beispielsweise in Form eines Zylinderrohres ausgebildet ist. In den Figuren wurde zur Verdeutlichung der Erfindung darauf verzichtet, die Achse, die seitlichen Tragarme und die Lagerungen der Ackerwalze im einzelnen darzustellen. Diese Bauelemente können in üblicher Weise ausgebildet sein.

Auf dem Tragkörper 7 sind mehrere Felgenelemente 3a, 3b angeordnet, welche jeweils drucklose Niederquerschnittsreifen 1 tragen.

Die Reifen 1 weisen einen sehr flachen Querschnitt auf und verfügen über keinen Innendruck, so daß die Lauffläche beim Abrollen einer starken Walkbewegung unterzogen wird. Die Schulterbereiche 2 der Reifen 1 sind in einem stumpfen Winkel zueinander angeordnet und zentrisch durch einen Fußbereich 10 verbunden. Bei einer Auflage des Reifens auf dem Erdboden wird dieser soweit verformt, daß sich eine im wesentlichen ebene Aufstandsfläche ergibt.

Erfindungsgemäß sind verschiedene Felgenelemente vorgesehen, nämlich das erste Felgenelement 3a und das zweite Felgenelement 3b. Das Felgenelement 3a weist bei dem in Fig. 1 gezeigten Ausführungbeispiel einen zylindrischen Distanzbereich 5 auf, welcher beidseitig einstückig jeweils mit einer Anlageschulter 4 versehen ist. Die Anlageschultern 4 weisen zueinander einen stumpfen Winkel auf, welcher dem Winkel der Schulterbereiche 2 der Reifen 1 entspricht. Angrenzend an die Anlageschultern 4 sind jeweils einstückig mit diesen ausgebildete Anlageränder 11 vorgesehen, welche sich im wesentlichen in axialer Richtung erstrecken. Die Anlageränder 11 liegen auf der Oberfläche des Tragkörpers 7 auf.

Der seitliche Abstand benachbarter Felgenelemente wird mittels eines Zwischenbereichs 6 ausgebildet, welcher. wie in Fig. 1 gezeigt, in Form eines ringförmigen Elementes ausgestaltet sein kann.

Die zweiten Felgenelemente 3b bilden die seitlichen Abschlußelemente und sind jeweils nur mit einer Anlageschulter 4 ausgestattet, welche, wie bei den ersten Felgenelementen 3a in einen Anlagerand 11 übergehen.

Die andere Seite des zweiten Felgenelements 3b wird durch eine sich in axialer Richtung erstreckende Ringscheibe gebildet.

In Fig. 2 ist ein weiteres Ausführungsbeispiel der Erfindung dargestellt, welches sich von dem in Fig. 1 gezeigten Ausführungsbeispiel dadurch unterscheidet, daß die Felgenelemente 3a keinen Distanzbereich 5 umfassen, sondern deren Anlageschultern 4 direkt aneinandergrenzen.

In Fig. 3 ist eine weitere Abwandlung des in Fig. 1 gezeigten Ausführungsbeispiels dargestellt, gemäß welcher der Distanzbereich 5 in radialer Richtung nach innen zurückversetzt ist. Weiterhin ist in Fig. 4 eine Seitenwandung 12 dargestellt, welche beispielsweise in Form einer Kreisscheibe ausgebildet sein kann, mit welcher der Tragkörper 7 verbunden ist. Die Seitenwandung 12 weist eine Ausnehmung auf, durch welche eine Achse durchführbar ist, um die Ackerwalze an seitlichen Tragarmen zu lagern und um die Achse in ihrer Längsrichtung zu verspannen damit die Seitenwandungen 12 gegeneinander gezogen werden.

In Fig. 4 ist ein einzelnes Felgenelement des in Fig. 3 gezeigten Ausführungsbeispiels dargestellt, welchem ein Abstreifer 9 zugeordnet ist, um den rückversetzten Distanzbereich 5 von anhaftendem Erdreich zu reinigen.

In Fig. 5 ist ein weiteres Ausführungsbeispiel eines Felgenelementes im Schnitt dargestellt, welches sich von den bisher gezeigten Ausführungsbeispielen dadurch unterscheidet, daß angrenzend an den Anlagerand 11 ein Ansatz 13 vorgesehen ist, welcher eine axiale Länge aufweist, welche der Hälfte der axialen Länge des Zwi schenbereichs 6 entspricht. Es ist somit möglich, die Felgenelemente 3a bzw. das entsprechend ausgebildete Felgenelement 3b ohne zusätzliche Zwischenelemente so aneinandergrenzend anzuordnen, wie dies in Fig. 6 dargestellt ist.

Das in Fig. 6 gezeigte Ausführungsbeispiel der erfindungsgemäßen Ackerwalze weist anstelle des zylindrischen Tragkörpers 7 mehrere Haltestäbe 8 auf, welche an der Innenseite der Felgenelemente angeordnet und gleichmäßig um den Umfang verteilt sind. Die Haltestäbe 8 können an ihren Enden jeweils mit einem Gewinde versehen sein und mittels einer Mutter 14 mit den Seitenwandungen 12 verspannt werden.

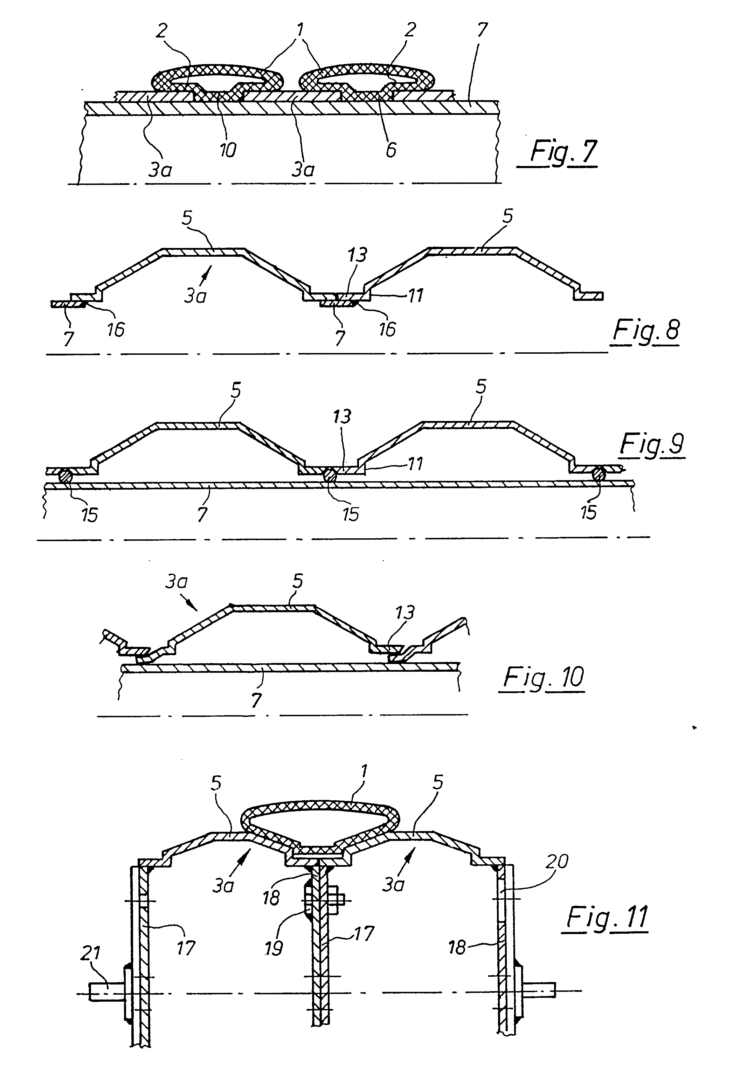

Die Fig. 7 zeigt ein weiteres Ausführungsbeispiel der erfindungsgemäßen Ackerwalze, welches sich von den bisher beschriebenen Ausführungsbeispielen dadurch unterscheidet, daß die Schulterbereiche 2 der Reifen 1 einen Winkel von 180o bilden. Die Felgenelemente 3a können in besonders einfacher Weise in Form von Zylinderringen ausgebildet sein. Ein seitliches Verrutschen der Reifen wird dadurch verhindert, daß deren Fußbereich 10 in Zwischenräume zwischen benachbarten Felgenelementen 3 eingeführt ist.

In den Fig. 8 bis 10 sind jeweils verschiedene Ausführungsbeispiele der Zuordnung der Felgenelemente 3a zueinander bzw. der Felgenelemente 3a zu dem Tragkörper 7 dargestellt.

In Fig. 8 sind mehrere Tragkörper 7 vorgesehen, welche jeweils in Form von Zylinderringen ausgebildet sind und mittels einer Schweißnaht 16 mit einem Ansatz 13 eines Felgenelementes verbunden sind. Durch diese Ausgestal tungsform ist es möglich, die einzelnen Felgenelemente 3a (und 3b) gegeneinander zu stecken, um auf diese Weise einen festen Sitz der Felgenelemente sicherzustellen.

In Fig. 9 ist ein weiteres Ausführungsbeispiel dargestellt, bei welchem die Ansätze 13 jeweils an ihren äußeren Kanten abgeschrägt sind, so daß ein ringförmiger elastischer Körper 15 zwischen den Ansätzen und dem Tragkörper 7 angeordnet werden kann. Durch Verwendung dieses Ringkörpers 15 kann der Zwischenraum zwischen den Ansätzen 13 und dem Tragkörper 7, welcher in Fig. 9 zum Zwecke der klareren Darstellung übertrieben groß abgebildet ist, überbrückt werden, so daß bei montierter Ackerwalze keine Relativbewegung zwischen den Felgenelementen 3a, 3b und dem zylindrischen Tragkörper 7 auftritt.

Eine weitere Ausführungsvariante zeigt Fig. 10. Dabei ist zumindest einer der Ansätze 13 mit einem Durchmesser ausgebildet welcher sich von dem Durchmesser des anderen Ansatzes 13 unterscheidet, so daß aneinander grenzende Ansätze benachbarter Felgenelemente 3a, 3b aufeinander schiebbar sind. Dabei erweist es sich als besonders günstig, zumindest einen der Ansätze 13 mit axialen Schlitzen zu versehen, so daß dieser gespreizt oder in seinem Durchmesser verringert werden kann. Dadurch ist es möglich, die Felgenelemente durch seitliches Zusammenspannen fest mit dem Tragkörper 7 zu verklemmen oder Verkeilen.

In Fig. 11 ist ein weiteres Ausführungsbeispiel der erfindungsgemäßen Ackerwalze dargestellt, bei welchem benachbarte Felgenelemente 3a jeweils mit seitlichen Scheiben 17, 18 verbunden, beispielsweise mittels eines Schweißverfahrens. Die jeweiligen Scheiben 17, 18 benachbarter Felgenelemente 3a sind über Schraubbolzen 19 miteinander verbindbar. Um einen Zugang zur Betätigung der Schraubbolzen bzw. deren Muttern zu ermöglichen, weisen die Scheiben 17, 18 jeweils Montageausnehmungen auf, welche in entsprechender Weise dimensioniert sind. Erfindungsgemäß ist es somit möglich, die Felgenelemente selbst miteinander zu verbinden und zusätzlich eine zentrische Achse 21 vorzuspannen.

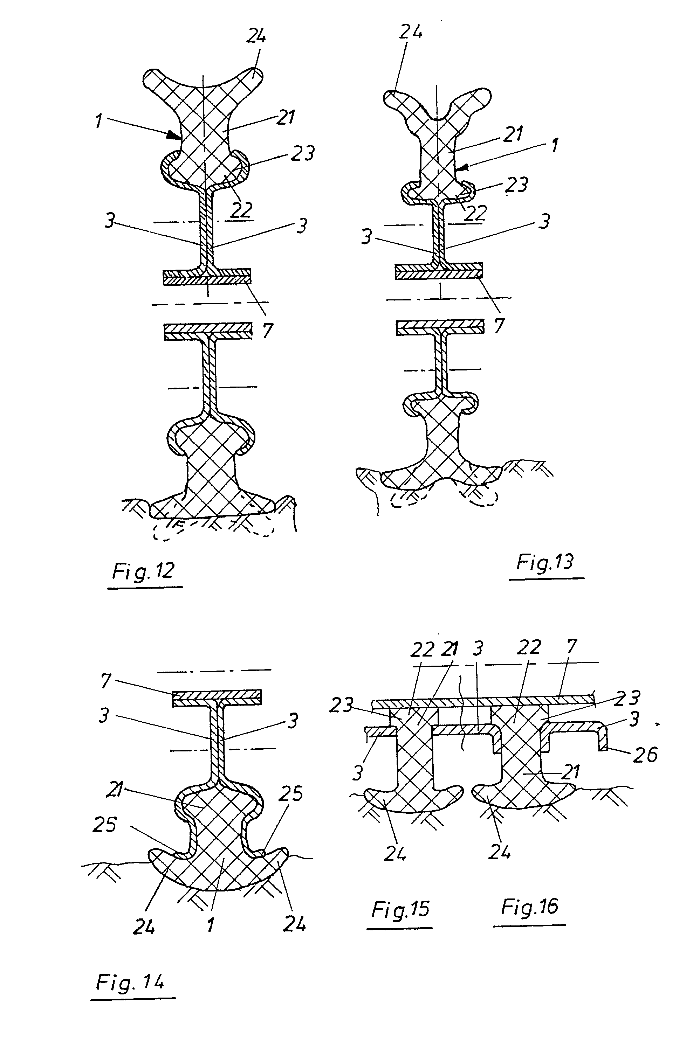

Die Fig. 12 und 13 zeigen Ausführungsbeispiele der erfindungsgemäßen Ackerwalze, bei welchen ein Innenrohr vorgesehen ist, welches den Tragkörper 7 bildet. An dem Tragkörper 7 sind Felgenelemente 3 gelagert, welche hinsichtlich ihrer Befestigung und ähnlichen vorangegangen Ausführungsbeispielen gezeigten Felgenelementen entsprechen. Der Reifen 1 weist einen Stegbereich 21 auf, welcher sich in radialer Richtung erstreckt und an seinem radial innenliegenden Endbereich 22 mit seitlichen Wülsten 23 versehen ist. Die seitlichen Wülste 23 stellen somit eine axiale Verbreiterung oder Verdickung des Endbereichs 22 dar .und können durch die Felgenelemente 3 seitlich umgriffen oder umklammert werden. An den radial außenliegenden Bereichen weisen die Reifen 1 nach schräg außen gerichtete Ringwülste 24 auf, welche elastisch ausgebildet sind und sich in dem in den Fig. 12 und 13 oben gezeigten unbelasteten Zustand in einem Winkel von ca. 45o zur Mittelachse der Ackerwalze bzw. zur Mittelebene der Reifen 1 nach außen erstrecken. Bei einer Belastung werden die elastischen Ringwülste 24 so verformt, daß, wie in den unteren Bildhälften der Fig. 12 und 13 gezeigt, der Reifen 1 eine im wesentlichen ebene (Fig. 12) oder konkave (Fig. 13) Aufstand- oder Lauffläche aufweist. Es wird somit beispielsweise eine Bodenrille mit einem nahezu ebenen Grund gebildet (Fig. 12). Es ist jedoch auch möglich, wie in Fig. 13 gezeigt, eine Bodenrinne mit zwei abgesenkten Bereichen auszuformen. Die Ausgestaltung der Ringwülste (24) kann in weitem Bereich variiert und den jeweiligen Anforderungen angepaßt werden.

In Fig. 14 ist eine weitere Abwandlung der Fig. 12 und 13 gezeigten Ausführungsbeispiele dargestellt, bei welcher die Felgenelemente 3 an den radial außen liegenden Enden mit Schultern 25 versehen sind, welche zusätzlich zur Abstützung der Ringwülste 24 dienen können, um den Radius der Walze im belasteten Zustand exakter einzuhalten. Bei diesem Ausführungsbeispiel bilden die beiden Ringwülste 24 und die Schultern 25 unter Belastung eine ballig Auflagefläche aus.

Die Fig. 15 und 16 zeigen unterschiedliche Ausführungsbeispiele, bei welchen der Tragkörper 7 einen größeren Durchmesser aufweist, so daß die Endbereiche 22 der Reifen direkt gegen den Tragkörper 7 angelegt werden können. Die zusätzlich vorgesehenen Felgenelemente 3, welche wahlweise mit seitlichen Schultern 26 versehen sein können, verhindern dabei zusätzlich ein Verkippen des Reifens 1 und dienen im übrigen in bekannter Weise der Abstützung und Klemmung der Wülste 23.

Bei den in Fig. 12 bis 16 gezeigten Ausführungsbeispielen weisen jeweils die mittigen Stegbereiche 21 der Reifen 1 eine Dicke auf, welche zu einer ausreichenden Steifheit der Reifen führt und die Gefahr eine Umknickens beseitigt.

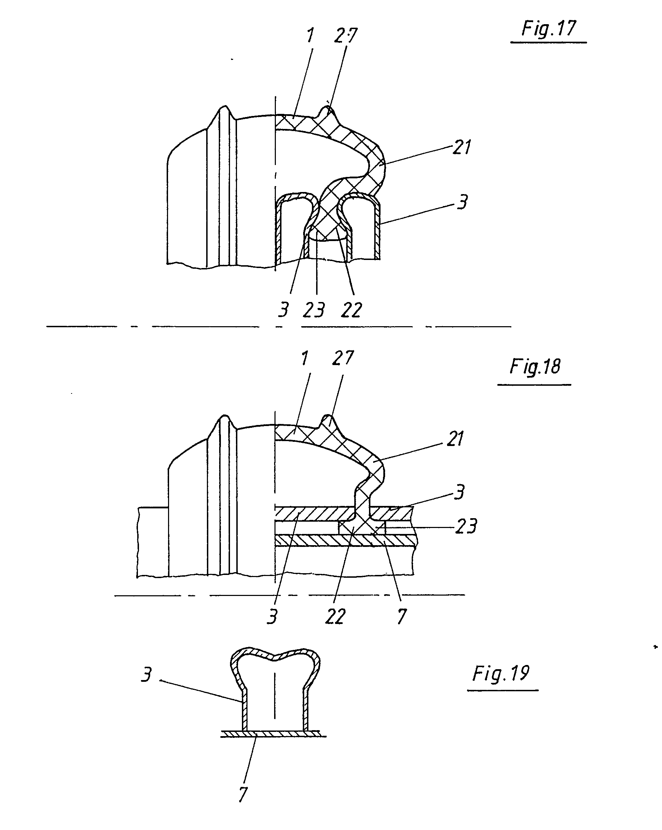

Die Fig. 17 und 18 zeigen alternative Ausführungsbeispiele des erfindungsgemäßen Reifens, welcher zu beiden Seiten der Lauffläche mit jeweils einem Stegbereich 21 versehen ist, dessen Endbereich 22, wie bereits beschrieben, seitliche Wülste 23 trägt, welche mittels der Felgenelemente 3 klemmbar sind. In Fig. 17 ist eine Ausführungsform dargestellt, bei welcher für jeden Reifen 1 vier Felgenelemente 3 vorgesehen sind. Die Felgenelemente können zusätzlich so ausgebildet sein, daß sie den Reifen von innen abstützen. Die in Fig. 17 gezeigten Felgenelemente 3 sind jeweils gleich ausgebildet, es ist jedoch auch möglich, wie in Fig. 19 gezeigt, symmetrische Felgenelemente 3 zu verwenden, wobei sich ein derartiges Felgenelement in einem Reifen befindet, während das nächste Reifenelement zwischen zwei benachbarten Reifen angeordnet ist.

Gemäß dem in Fig. 18 gezeigten Ausführungsbeispiel sind auf den rohrförmigen Tragkörper 7 mehrere zylindrische Felgenelemente 3 aufgeschoben, wobei der jeweilige Stegbereich 21 direkt gegen den Tragkörper 7 abgestützt ist.

Bei den beiden in den Fig. 17 und 18 gezeigten Reifen sind jeweils am Außenumfang angeordnete Rippen 27 vorgesehen, welche beim Abrollen der Ackerwalze Rillen in der Erdoberfläche erzeugen, in welchen Saatgut abgelegt werde kann.

Ein weiterer Vorteil der gezeigten Ausführungsbeispiele liegt darin, daß die Reifen 1 bzw. die Felgenelemente 3 drehbar auf dem Tragkörper 7 angeordnet sein können, so daß Kurvenfahrten der Ackerwalze, beispielsweise beim Wenden oder bei nicht geraden Feldrändern wesentlich erleichtert werden.

Die Erfindung ist nicht auf das gezeigte Ausführungsbeispiel beschränkt, vielmehr ergeben sich für den Fachmann im Rahmen der Erfindung vielfältige Abwandlungsmöglichkeiten, insbesondere hinsichtlich der Ausgestaltung der drucklosen Niederquerschnittsreifen und der Felgenelemente.

## Ansprüche

1. Ackerwalze mit mehreren nebeneinander angeordneten Reifen, gekennzeichnet durch mehrere ringförmige Felgenelemente (3), welche nebeneinander zur Ausbildung eines im wesentlichen zylindrischen Walzenkörpers angeordnet sind und mehrere drucklose Niederquerschnittsreifen (1) tragen.

2. Ackerwalze nach Anspruch 1, dadurch gekennzeichnet, daß der Reifen (1) eine Lauffläche und zwei miteinander verbundene Schulterbereiche (2) umfaßt und daß jeder Schulterbereich (2) auf einem Felgenelement (3) abgestützt ist.

3. Ackerwalze nach Anspruch 2, dadurch gekennzeichnet, daß im mittleren Bereich der Ackerwalze erste Felgenelemente (3a) angeordnet sind, welche zwei Anlageschultern (4) für benachbarte Reifen (1) aufweisen und daß an den beiden Enden jeweils ein zweites Felgenelement (3b) mit jeweils einer Anlageschulter (4) angeordnet ist.

4. Ackerwalze nach Anspruch 3, dadurch gekennzeichnet, daß die Anlageschultern (4) des ersten Felgenelements (3a) axial aneinandergrenzen.

5. Ackerwalze nach Anspruch 3, dadurch gekennzeichnet, daß die Anlageschultern (4) des ersten Felgenelements (3a) axial mittels eines im wesentlichen zylindrischen Distanzbereichs (5) verbunden sind.

6. Ackerwalze nach Anspruch 5, dadurch gekennzeichnet, daß der Distanzbereich (5) radial zurückversetzt ausgebildet ist.

7. Ackerwalze nach einem der Ansprüche 2 bis 6, dadurch gekennzeichnet, daß die Schulterbereiche (2) des Reifens (1) zueinander einen stumpfen Winkel aufweisen.

8. Ackerwalze nach einem der Ansprüche 2 bis 6, dadurch gekennzeichnet, daß die Schulterbereiche (2) des Reifens (1) zueinander einen Winkel von 180o aufweisen.

9. Ackerwalze nach einem der Ansprüche 3 bis 8, dadurch gekennzeichnet, daß die Anlageschultern (4) benachbarter Felgenelemente (3a, 3b) im Zentrumsbereich des Reifens axial durch einen im wesentlichen zylindrischen Zwischenbereich (6) beabstandet sind.

10. Ackerwalze nach Anspruch 9, dadurch gekennzeichnet, daß der Zwischenbereich (6) durch einen Zylinderring gebildet wird.

11. Ackerwalze nach Anspruch 9, dadurch gekennzeichnet, daß der Zwischenbereich (6) durch seitliche zylindrische Ansätze der Felgenelemente (3a, 3b) gebildet wird.

12. Ackerwalze nach Anspruch 1, dadurch gekennzeichnet, daß der Reifen (1) zumindest einen mit einer Lauffläche verbundenen, sich in radialer Richtung erstreckenden Stegbereich (21) aufweist, dessen radial innenliegender Endbereich (22) mittels seitlicher Wülste (23) verbreitert ist und daß der Endbereich mittels Felgenelementen (3) abgestützt ist.

13. Ackerwalze nach Anspruch 12, dadurch gekennzeichnet, daß die Felgenelemente (3) die Wülste (23) zumindest zum Teil umgreifen.

14. Ackerwalze nach Anspruch 12 oder 13, dadurch gekennzeichnet, daß der Reifen (1) mit einem mittigen Stegbereich versehen ist.

15. Ackerwalze nach einem der Ansprüche 12 bis 14, dadurch gekennzeichnet, daß der Reifen (1) seitlich angrenzend an die Lauffläche jeweils einen Stegbereich (21) aufweist.

16. Ackerwalze nach einem der Ansprüche 12 bis 15, dadurch gekennzeichnet, daß der Reifen (1) im Bereich der Lauffläche mit radial und/oder axial von der Reifenmitte weggerichteten, elastischen Ringwülsten (24) versehen ist.

17. Ackerwalze nach Anspruch 16, dadurch gekennzeichnet, daß die Ringwülste einen im unbelasteten Zustand des Reifens konkaven Laufflächenbereich umgrenzen.

18. Ackerwalze nach Anspruch 16 oder 17, dadurch gekennzeichnet, daß die Ringwülste im belasteten Zustand des Reifens (1) mit dem Laufflächenbereich einen im wesentlichen ebenen Aufstandsbereich des Reifens (1) bilden.

19. Ackerwalze nach Anspruch 16 oder 17, dadurch gekennzeichnet, daß die Ringwülste im belasteten Zustand des Reifens (1) mit dem Laufflächenbereich einen im wesentlichen balligen Aufstandsbereich des Reifens (1) bilden.

20. Ackerwalze nach einem der Ansprüche 1 bis 19, dadurch gekennzeichnet, daß die Felgenelemente (3a, 3b) auf einen zylindrischen Tragkörper (7) aufgeschoben sind.

21. Ackerwalze nach Anspruch 20, dadurch gekennzeichnet, daß für alle Felgenelemente (3a, 3b) ein Tragkörper (7) vorgesehen ist.

22. Ackerwalze nach Anspruch 20 oder 21, dadurch gekennzeichnet, daß ein Zwischenraum zwischen den Felgenelementen (3a, 3b) und dem Tragkörper (7) mit einer ausgeschäumten Masse gefüllt ist.

23. Ackerwalze nach Anspruch 20 oder 21, dadurch gekennzeichnet, daß ein Zwischenraum zwischen den Felgenelementen (3a, 3b) und/oder dem Tragkörper (7) mit einer aushärtbaren elastischen Masse gefüllt ist.

24. Ackerwalze nach Anspruch 20 oder 21, dadurch gekennzeichnet, daß die Ansätze der Felgenelemente (3a, 3b) mit dem Tragkörper (7) verbunden sind.

25. Ackerwalze nach einem der Ansprüche 20 oder 21, dadurch gekennzeichnet, daß im Anlagebereich der Ansätze ein ringförmiger elastischer Körper angeordnet ist, gegen welchen der Tragkörper (7) und die Ansätze anliegen.

26. Ackerwalze nach einem der Ansprüche 1 bis 11, dadurch gekennzeichnet, daß die Felgenelemente (3a, 3b) seitliche, miteinander formschlüssig in Eingriff bringbare Ansätze umfassen.

27. Ackerwalze nach Anspruch 26, dadurch gekennzeichnet, daß die Ansätze benachbarter Felgenelemente (3a, 3b) jeweils einen unterschiedlichen Durchmesser aufweisen und daß ein Ansatz über den anderen Ansatz aufsteckbar ist.

28. Ackerwalze nach Anspruch 27, dadurch gekennzeichnet, daß zumindest ein Ansatz in radialer Richtung spreizbar ist.

29. Ackerwalze nach einem der Ansprüche 1 bis 11, dadurch gekennzeichnet, daß die Felgenelemente mittels mehrerer am Innenumfang beabstandet angeordneter Haltestäbe (8) getragen werden.

30. Ackerwalze nach einem der Ansprüche 1 bis 11, dadurch gekennzeichnet, daß benachbarte Felgenelemente (3a, 3b) miteinander verbunden sind.

31. Ackerwalze nach einem der Ansprüche 1 bis 11 und 30, dadurch gekennzeichnet, daß an jedem Felgenelement (3a, 3b) seitlich Scheiben befestigt sind, wobei die Scheiben benachbarter Felgenelemente miteinander verbunden sind.

32. Ackerwalze nach Anspruch 31, dadurch gekennzeichnet, daß die Scheiben zugeordnete Ausnehmungen zur Durchführung von Schraubbolzen und Montageausnehmungen zum Zugriff auf die Schraubbolzen aufweisen.

33. Ackerwalze nach einem der Ansprüche 1 bis 32, dadurch gekennzeichnet, daß im Bereich zwischen benachbarten Reifen (1) jeweils ein Abstreifer (9) angeordnet ist.

34. Ackerwalze nach einem der Ansprüche 1 bis 32, gekennzeichnet durch eine sich über die gesamte Breite der Ackerwalze erstreckende Reinigungsbürste.

_Fig. 1_

_Fig. 2_

_Fig. 3_

_Fig. 4_

_Fig. 5_

_Fig. 6_

Fig. 7

Fig. 8

Fig. 9

Fig. 10

Fig. 11

Fig.12

Fig.13

Fig. 14

Fig.15

Fig.16

Fig.17

Fig.18

Fig.19